# EUROPEAN PATENT APPLICATION

(11) **EP 4 620 734 A1**
(43) Date of publication of application: **24.09.2025**
(21) Application number: 24165542.2
(22) Date of filing: 22.03.2024
(51) Int. Cl.: B60P 7/08, B60P 7/15, B60R 9/06

(54) **RAIL REMOVABLY INSTALLABLE ON A PICKUP TRUCK, KIT AND SYSTEM**

(71) Applicant: Gi.Anso 4x4 Club S.A., 19200 Elefsina-Attikis (GR)
(72) Inventor: Michailidis, Athinodoros, 19200 ELEFSINA-ATTIKIS (GR)
(74) Representative: Araujo, Daniel

(57) **Abstract**

A rail (3) removably installable as a handrail on one of two lateral sidewalls (1a) of a truck bed of a pickup truck (1) and, alternatively, as a crossbar on and across the two lateral sidewalls (1a), wherein the rail (3) is lengthwise telescopic. Also, a kit and a system.

## Description

### TECHNICAL FIELD

The present disclosure relates to a rail which is removably installable as a handrail on one of two lateral sidewalls of a truck bed of a pickup truck and, alternatively, as a crossbar on and across the two lateral sidewalls. The present disclosure also relates to a kit comprising the rail. Also, the present disclosure relates to a system which comprises the rail.

### STATE OF THE ART

A truck bed is a pickup truck's rear part which is commonly used for loading thereon cargo to be transported with the truck, and typically said truck bed comprises a platform and two sidewalls which define the lateral borders of the platform and are useful for preventing the cargo from falling off the lateral sides of truck bed. Also, there are known pickup trucks which comprise additional elements or accessories at their truck beds. A known accessory for the truck bed of a pickup truck is a cover assembly which comprises a rollable curtain or lid for covering the truck bed. A particular cover assembly that comprises a rollable curtain is described in patent application EP 4309932 A1.

Also, there are known conventional pickup trucks which comprise rails, e.g. handrails or cross bars, located the sidewalls of the truck's truck bed. In particular, there are known trucks which comprise handrails installed atop and along the sidewalls of the truck bed. Those handrails may be grabbed by and provide support to a user of the truck or to another worker who may work on the truck bed. Said handrails may also serve for supporting or securing thereon the cargo. Also, there are known trucks which comprise crossbars which are removably or permanently fixed on the two sidewalls of the truck and extend laterally across the truck bed's sidewalls and over said truck bed. Said crossbars (cross bars), which are a type of rails, may serve for supporting or securing thereon cargo or other objects, similarly to the aforementioned handrails.

A disadvantage with the aforementioned known conventional cover assemblies, rollable curtains, crossbars and handrails, each of which can be considered as an improvement of the truck bed, is that their respective structure or manner of integration with the rest of the truck bed often makes it difficult the addition of other improvements. Hence, often adding a conventional cover assembly with or without a rollable curtain on the truck bed requires that there are no crossbars or handrails on the truck bed, because if such crossbars or handrails exist attached to the sidewalls of the truck bed they may make it technically challenging the installation of the rollable curtain without special expertise or tools. Also, the installation of conventional crossbars or handrails on truck beds may be a complicated task and may require the permanent modification of the truck's truck bed.

Hence, there is a need for overcoming the drawbacks of the conventional rails for truck beds of pickup tracks.

### DESCRIPTION OF THE INVENTION

The present invention overcomes many of the drawbacks of conventional rails for truck beds of pickup tracks. The present invention offers a rail which may be removably installed as a handrail and, alternatively, may be installed as a crossbar. Hence, the present invention offers versatility and reconfigurability. Also, the present invention may allow for installing handrails or crossbars on a truck bed, and at the same time may allow for using a rollable curtain for covering the truck bed. Moreover, at least some embodiments of the present invention may advantageously allow for adjusting the exact position of the rail on the truck bed, and for preventing the theft and unauthorized removal of the rail from the truck bed.

A first aspect of the present invention concerns a rail removably installable as a handrail on one of two lateral sidewalls of a truck bed of a pickup truck and, alternatively, as a crossbar on and across the two lateral sidewalls, wherein the rail is lengthwise telescopic. Hence, advantageously the rail offers versatility and reconfigurability because it may be converted from a handrail to a crossbar. Since the the rail is lengthwise telescopic, its length may be changed and this may advantageously enable changing the exact configuration on the rail on the pickup truck, and may also advantageously allow for converting the rail from a handrail to a crossbar and vice versa. Also, the rail of the present invention is cost efficient and storage-efficient because a user of the rail and the truck does not need to buy and store different crossbars and handrails for the truck. Instead, the rail of the present invention allows its user to use the rail as a crossbar and, alternatively, as a handrail.

In a preferred embodiment of the first aspect of the invention, the rail is removably installable as the handrail in a corresponding guide of the one of the two lateral sidewalls of the truck bed and, alternatively, as the crossbar on and across the corresponding guides on the two lateral sidewalls, wherein each guide is configured to be installed lengthwise along the corresponding one of the lateral sidewalls of the truck bed. The use of said guides may advantageously simplify and facilitate the installation of the rail, and enable controlling and adjusting the position of the rail on the truck.

In a preferred embodiment of the first aspect of the invention, the rail comprises two or more securable parts which are arranged along a length of the rail and are being configured for being attached to any of the sidewalls. Advantageously said securable parts may allow for a simple and secure attachment of the rail on the sidewalls.

In a preferred embodiment which is according to the previous two preferred embodiments mentioned above, the two or more securable parts are configured to be attached to any of the sidewalls via the corresponding guide. This may advantageously further facilitate the installation of the rail, and may advantageously also allow for adjusting the exact position of the rail on said one or two guides.

In a preferred embodiment wherein the rail comprises the aforementioned optional two or more securable parts, the rail further comprises a slit which lengthwise is arranged across at least a portion of the length of the rail and is configured to receive attached thereat the two or more securable parts. Said slit may advantageously facilitate the installation of the rail as a handrail or a crossbar, and may also advantageously facilitate controlling and adjusting a position of the rail on the truck bed. For further facilitating the installation of the rail and the latter's exact position on the one or two sidewalls, it may be further useful if the securable parts are able to slide along said slit. For this reason, preferably the two or more securable parts are configured to slide along the slit.

In a preferred embodiment of the first aspect of the invention, the rail comprises a central part and two lateral parts which lengthwise across the rail are slidably attached to the central part on opposite sides of the central part such that either or both of the of lateral parts can lengthwise slide along the rail with respect to the central part. Hence, advantageously the rail may have a structure which is not complex but at the same time may enable controlling the rail's length in a simple manner.

In a preferred embodiment of the invention, the rail further comprises a fixing mechanism which is configured to be activated for enabling a change of a length of the rail, and be deactivated for preventing the change of the length of the rail. Hence, said fixing mechanism may advantageously facilitate avoiding undesired changes of the rail's length when said truck with the rail installed thereon is loaded with a cargo and/or is on the move.

A second aspect of the present invention concerns a kit which comprises: a rail according to the first aspect of the invention; two or more bases, wherein each of said two or more bases is configured for being simultaneously attached to the rail and to one of the lateral sidewalls of the truck bed. Hence, the aforementioned kit may allow for improving the functionality of said truck by the installation on said truck of the rail of the first aspect of the invention. Also, said kit advantageously enables a user to install the rail on the truck without requiring technical expertise or expensive and specialized tools. It may be understood that it may be desirable to install on a truck two or more rails. Hence, preferably said kit may comprises two or more rails and corresponding bases for each of the rails.

In a preferred embodiment of the second aspect of the invention, at least one of the bases comprises a securing mechanism which is configured for securing firmly attached thereat the rail. More, preferably the securing mechanism comprising a lock. Advantageously, said securing mechanism, especially if it comprises a lock, may further improve the safety of the installed rail and may also prevent the theft of the rail from the truck bed.

In a preferred embodiment of the second aspect of the invention, the kit further comprises a guide configured to be installed lengthwise along the one of the lateral sidewalls of the truck bed, wherein the guide is also configured to host attached thereat at least one of the two or more bases. More preferably, the kit comprises two guides so that each of said guides can be installed on a corresponding one of the truck bed's sidewalls.

In a preferred embodiment which is according to the previous one, the kit further comprises positioning means attachable to the guide and to the base and configured to fix the base in position on the guide. Said positioning means may advantageously facilitate the positioning, installation and attachment of the base to the guide in a simple manner.

In a preferred embodiment which is according to the previous one, the guide comprises a slit which lengthwise is arranged across at least a portion of the length of the guide and is configured to receive attached thereat the positioning means. Said slit in combination with the positioning means may advantageously facilitate the installation of the rail, and for controlling the position of the rail on the guide.

In a very preferred embodiment of the invention, the guide is configured to support and guide a rollable curtain which is for covering the truck bed of the pickup truck. This may advantageously allow for improving the functionality of the truck bed via the installation on the truck bed of the rollable curtain and of the rail which can be installed as a handrail and, alternatively, as a crossbar. Hence, preferably said rollable curtain and guide may be parts of a cover assembly for covering the truck bed. Also, preferably the rail may also be part of said cover assembly or of another type of cover assembly which may or may not comprise a rollable curtain.

A third aspect of the present invention concerns a system installable on a truck bed of a pickup truck, the system comprising: two or more rails according to third aspect of the invention; a plurality of bases; two guides; a rollable curtain for covering the truck bed; wherein each base is configured for being simultaneously attached to a corresponding one of the rails and to corresponding one of the guides; each of the guides is configured to be installed lengthwise along a corresponding one of the lateral sidewalls of the truck bed, and wherein the guide is also configured to host attached thereat the base; each of the guides is configured to support and guide the rollable curtain. Said system may advantageously be installable on the truck bed of a pickup truck for improving the truck's functionality. Said system of the third aspect of the invention may be a cover assembly for covering the truck bed.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a pickup truck with installed thereon a preferred embodiment of a system according to the third aspect of the invention, wherein two rails of the system are installed as handrails.
Fig. 2 illustrates the embodiment of Fig. 1 but with the rails installed as crossbars.
Fig. 3 illustrates a perspective of the embodiment of Fig. 3, with one of the rails not attached to the pickup truck.
Fig. 4 illustrates a perspective of the embodiment of Fig. 1, with one of the rails not attached to the pickup truck.
Fig. 5 illustrates a perspective of the embodiment of Fig. 3, with one of the rails not attached to the pickup truck.
Fig. 6 illustrates a base of the embodiment of Fig. 1, with the base being at an open unlocked mode.
Fig. 7 illustrates the base of Fig. 6, but with the base being at a closed locked mode.
Fig. 8 illustrates the base of Fig. 7 from a different perspective compared to Fig. 7.
Fig. 9 illustrates the base of Fig. 6 from a different perspective compared to Fig. 6.
Fig. 10 illustrates parts of the system of Fig. 1.
Fig. 11 illustrates the parts shown in Fig. 10 assembled and installed to each other.
Fig. 12 illustrates part of the system of Fig. 1.
Fig. 13 illustrates a cross section of the part shown in Fig. 12.
Fig. 14 illustrates a preferred embodiment of a rail according to the first aspect of the invention, in an extended state (extended mode) and in a retracted state (retracted mode).
Fig. 15 illustrates a preferred embodiment of a variation of a rail according to the first aspect of the invention, in different states.
Fig. 16 illustrates different states of the rail of Fig. 15 from a different perspective (view) compared to Fig. 15.
Fig. 17 illustrates the rail of Fig. 15 from a different perspective (view).
Fig. 18 illustrates a pickup truck and a preferred embodiment of a kit according to the second aspect of the invention, wherein part of the kit is installed on the pickup truck.
Fig. 19 illustrates a closer view of the embodiment of Fig. 18.
Fig. 20 illustrates parts of the truck and the kit of Fig. 18.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and methods according to the invention.

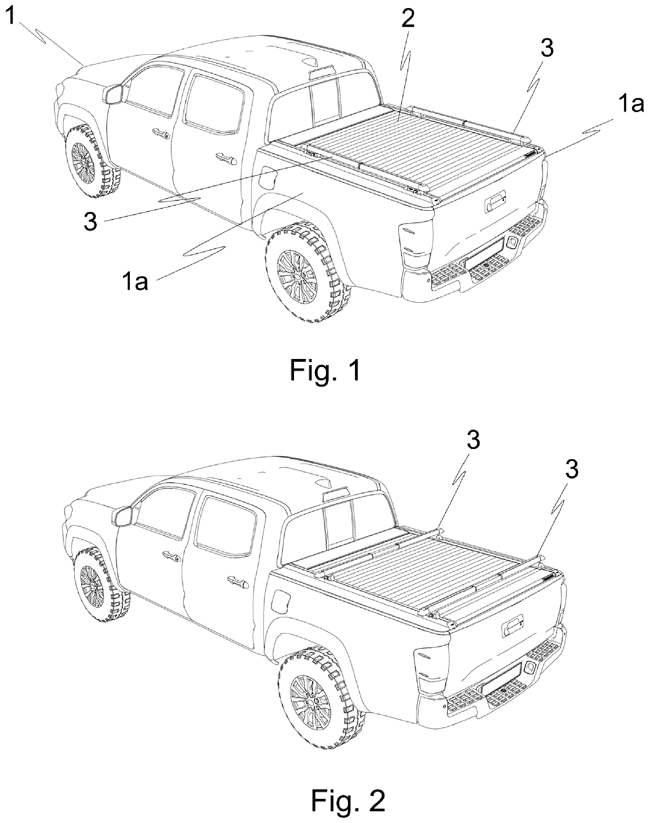

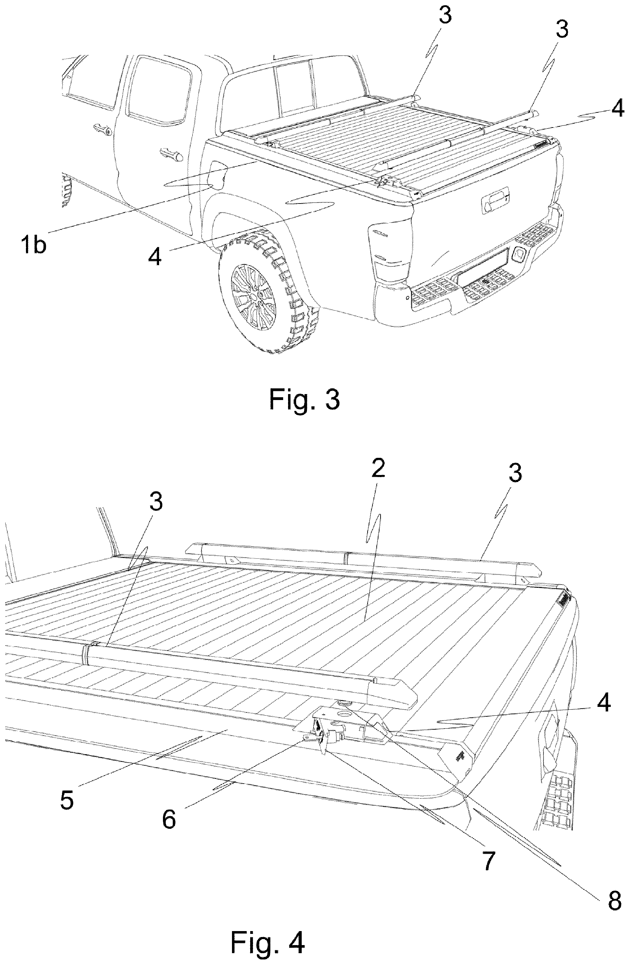

Particular embodiments of the invention are described below with reference to Fig. 1-17. Fig. 1-13 illustrate a preferred embodiment of a system according to the invention, wherein said system is mounted on a truck 1 which is a pickup truck. The system comprises two rails 3 and four bases 4. The two rails 3 are telescopic and via the bases 4 can be removably attached and fixed on the sidewalls 1a (side panels) of the truck 1. For this purpose, the system of Fig. 1-13 further comprises a pair of guides 5 each of which is lengthwise mountable on a respective sidewall 1a of the truck 1. More specifically, as shown in Fig. 3 each guide 5 of the embodiment of Fig. 1-13 is attached to an edge 1b of the respective sidewall 1a. Also, in the embodiment of Fig. 1-13, these guides 5 guide a rollable curtain 2 which is for covering a truck bed of the vehicle (pickup truck). In the embodiment of Fig. 1-13, each of the bases 4 can be removably attached and fixed to one of the guides 5 for thereby securing each of the rails 3 on the guides 5. Each rail 3 may be fixed and arranged on a single guide 5 over one of the sidewalls. Alternatively, each rail may be fixed and arranged on both guides 5 over the truck bed or the rollable curtain 2. When the rails are fixed and lengthwise arranged over the sidewalls as shown in Fig. 1, they can act as side handrails. When the rails 3 are fixed and lengthwise arranged over the truck bed or the rollable curtain 2, as shown in Fig. 2, they can act as crossbars (i.e. crossbars) extending between the sidewalls of the truck. The length of the rails 3 is adjustable due to the fact that said rails 3 are telescopic. Hence, if necessary, the length of the bars can be adjusted, particularly if this required for repositioning and converting the rails 3 from side handrails to cross bars and vice versa. Therefore, it may be understood that in the system shown in Fig. 1-13, the rail 3 is removably installable as a handrail on on one of two lateral sidewalls 1 a of a truck bed of a pickup truck 1 and, alternatively, as a crossbar on and across the two lateral sidewalls 1a, wherein the rail 3 is lengthwise telescopic. It may also be considered that the system of Fig. 1-13 is a system installable on a truck bed of a pickup truck 1, the system comprising: two rails 3; four bases 4; two guides 5; the rollable curtain 2 for covering the truck befd; wherein each base 4 is configured for being simultaneously attached to a corresponding one of the rails 3 and to a corresponding one of the guides 5; each of the guides 5 is configured to be installed lengthwise along a corresponding one of the lateral sidewalls 1a of the truck bed, and wherein the guide 5 is also configured to host attached thereat the base 4; each of the guides 5 is configured to support and guide the rollable curtain 2.

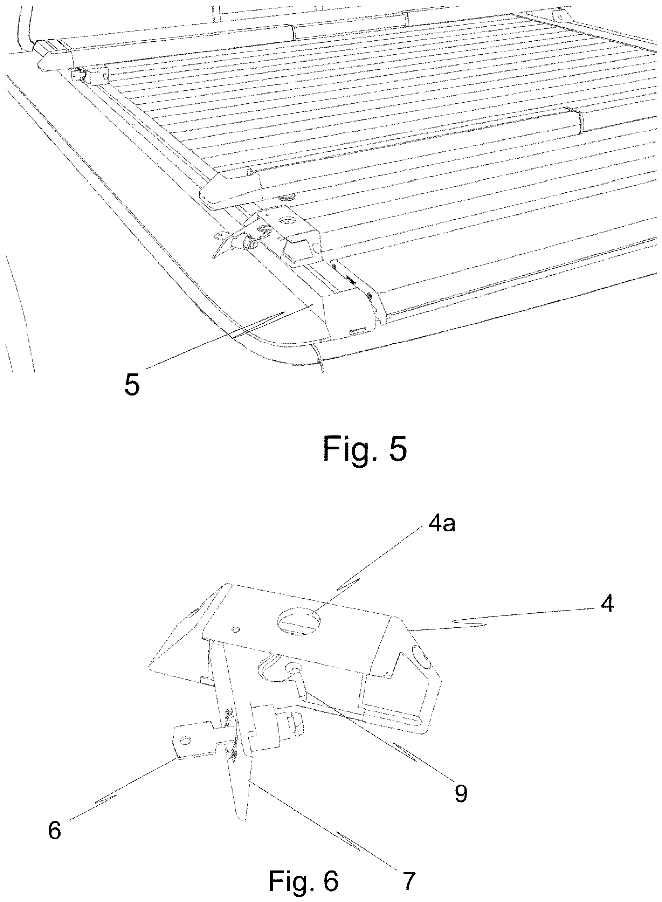

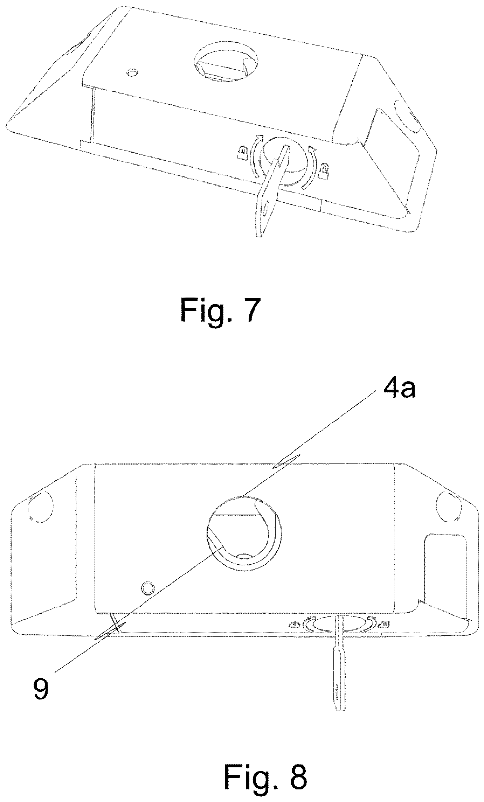

In the system of Fig. 1-13, at least one of the bases comprises a securing mechanism 7 for securing in position the rail 3 which is attached to the vehicle 1 via said base 4. For this purpose, the rail 3 comprises a securable part 8 that is attachable to the base 4 and is securable in position by said securing mechanism 7 of the base 4. For this purpose, the base comprises an opening 4a via which the securable part 8 can be at least partially inserted in the base 4. The base 4 also comprises a lip 9 which is movable between an unlocking position, as shown in Fig. 6, and a locking position as shown Fig. 7-8. At the locking position the lip 9 is aligned with the opening 4a and is attached to the securable part 8, thereby securing/locking in place the securable part 8 when the latter has been inserted in the base 4 via the opening 4a. The securing mechanism 7 further comprises a lock 6 for the locking the lip 9 at the locking position. Said lock 6 may be locked with a key and can also serve as an antitheft mechanism for preventing the theft or the unauthorized removal of the rails 3 from the truck.

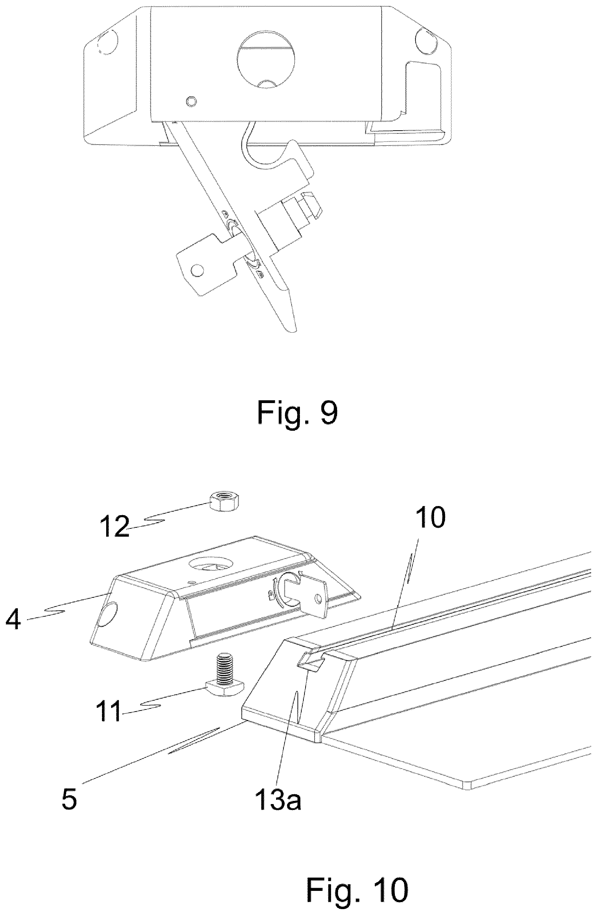

The base 4 may be attached and fixed in position on the guide 5 via positioning means, and in the embodiment of Fig. 1-13 said positioning means comprise a bolt 11 and a nut 12. The nut 12 secures the bolt 11 to the base 4 such that the head of the bolt 11 can be inserted inside and slide along a slit 10 which extends along the length of the guide 5. Hence, the exact position of the base 4, and consequently of the rail 3, along the guide 5 can be controlled. For securing the base 4 at a desired position along said slit 10, the nut 12 may be tightened on the bolt 11. Also, for facilitating the insertion of the bolt's head within the slid, the guide further comprises an opening 13a which is shown in Fig. 10.

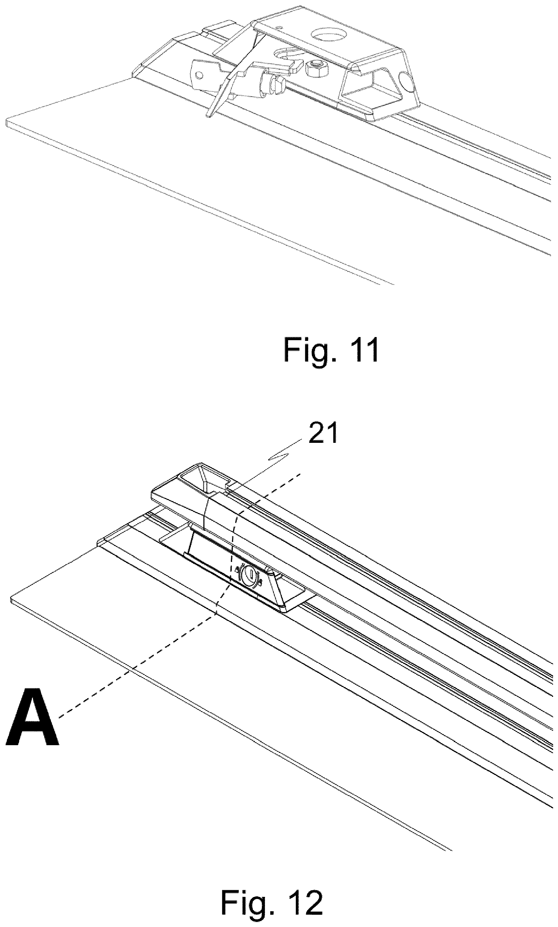

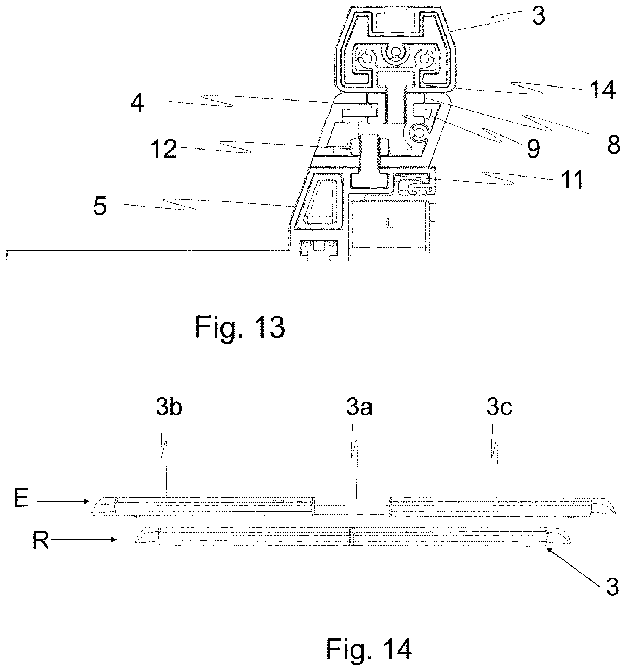

Fig. 13 illustrates a cross section along the dashed line A which is indicated in Fig. 12. Fig. 13 show the system in a state where the rail 3 is attached and secured/fixed on the base 4 which is attached/fixed on the guide 5. In the particular embodiment of Fig. 12-13, the securable part 8 via which the rail 3 is attached to the base 4 comprises a respective bolt 14. Said bolt 14 may also be called second bolt so it can be distinguished from the aforementioned bolt 11 (i.e. first bolt) used for securing the base 4 to the guide 5. As illustrated in Fig. 13, the head of said second bolt 14 is inserted in a respective rail or slot in the rail 3, and the securable part 8 is insertable in the aforementioned opening 4a of the base 4. The securable part 8 is locked in position at the base 4 by the aforementioned lip 9 of the securing mechanism 7.

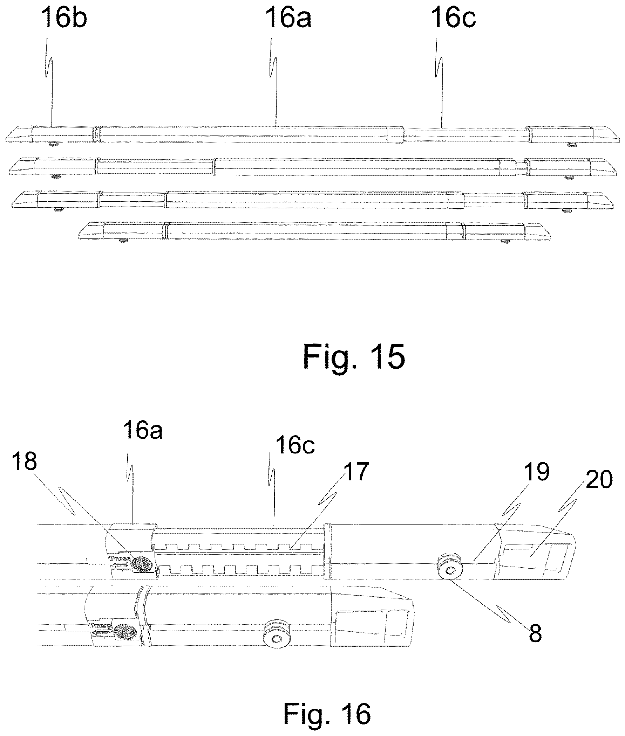

A preferred embodiment of a telescopic rail 3 according to first aspect of the invention, is shown in Fig. 14 which illustrates said rail 3 in two different states, namely a retracted state R at which the length of the rail is at a minimum, and an extended state E at which the length of the rail is at a maximum. The length of the rail 3 of Fig. 14 may change because the rail 3 comprises a central part 3a and two lateral parts 3b, 3c which along the length of the rail are oppositely positioned to each other, i.e. the lateral parts 3b, 3c are on opposite sides of the central part 3a along the rail's length. Each of the lateral parts 3b, 3c can lengthwise slide along the central part 3a for thereby changing the length of the rail 3. In the embodiment Fig. 14 the central part 3a and the lateral parts 3b, 3c are shaped such that the central part 3a lengthwise is insertable in the lateral parts 3b, 3c. In an alternative embodiment, shown in Fig 15-17, wherein the rail also comprises a central part 16a and two lateral parts 16b, 16c, the central part 16a and the lateral parts 16b, 16c are shaped such that each one of the lateral parts 16b, 16c lengthwise is insertable in the central part 16a.

Also, in the embodiment of Fig. 16 the position of either of the lateral parts 16b, 16c with respect to the central part 16a can be adjusted so that the rail can be lengthwise extended on either side, so that the overall length of the rail can be controlled, as shown in Fig. 15 which illustrates the rail in different states. Also, in the embodiment of Fig. 15-17, the rail comprises a fixing mechanism for the fixing and locking of the position of either of the lateral parts 16b, 16c with respect to the central part 16a. For this purpose, each of the lateral parts 16b, 16c comprises along part of its length a set 17 of recesses or openings with which said fixing mechanism can engage or disengage for respectively locking or unlocking in position the lateral part. A user of the rail can controllably enable the disengaging of the fixing mechanism from the set 17 of recesses or openings via a button 18 of said fixing mechanism. When the button 18 is pushed it causes the disengagement of the fixing mechanism form the set 17 of recesses or openings so that the respective lateral part 16b, 16c can slide with respect to the central part 16a, and when the button is not pushed by the user, the fixing mechanism is engaged with the set of recesses preventing the sliding of the respective lateral part 16b, 16c.

Also, in the embodiment of Fig. 16, each of the lateral parts 16b, 16c comprises a slit 19 which lengthwise extends along part of the length of the respective lateral part 16b, 16c. Within said slit 19 the securable part 8 can be inserted and fixed in position along the rail. For facilitating the insertion of the securable part 8 in the slit, the lateral part 16b, 16c further comprises an opening 20 at an end of said slit 19. It is noted that preferably the rail may also comprise a second slit which, similarly to the aforementioned slit 19, is also arranged along the length of the rail. However, compared to the aforementioned slit 19 (i.e. first slit 19) to which the securable part 8 is insertable, said optional second slit (e.g. of the T-slot type) of the rail may be located on an opposite side of the rail. As shown in Fig. 12, in the embodiment of Fig. 1-13, the rail 3 comprises such a second slit 21. This second slit 21 may preferably be configured to receive removably attached thereat another rail or other items or accessories. This may advantageously allow for removably attaching one rail on other rails and for example for attaching a rail as a crossbar, on top of two other rails which are removably attached on the truck as handrails. The optional attachment of a rail on another rail may preferably be done via the aforementioned optional securable parts 8 and second slit, and for this reason, said second slit 21 is preferably configured (e.g. shaped) to host removably attached thereat said securable parts 8.

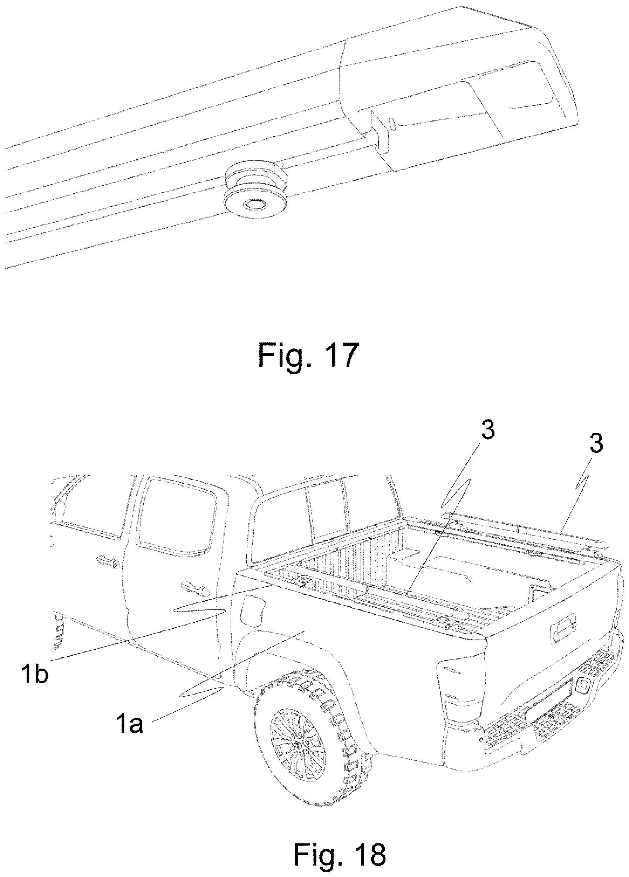

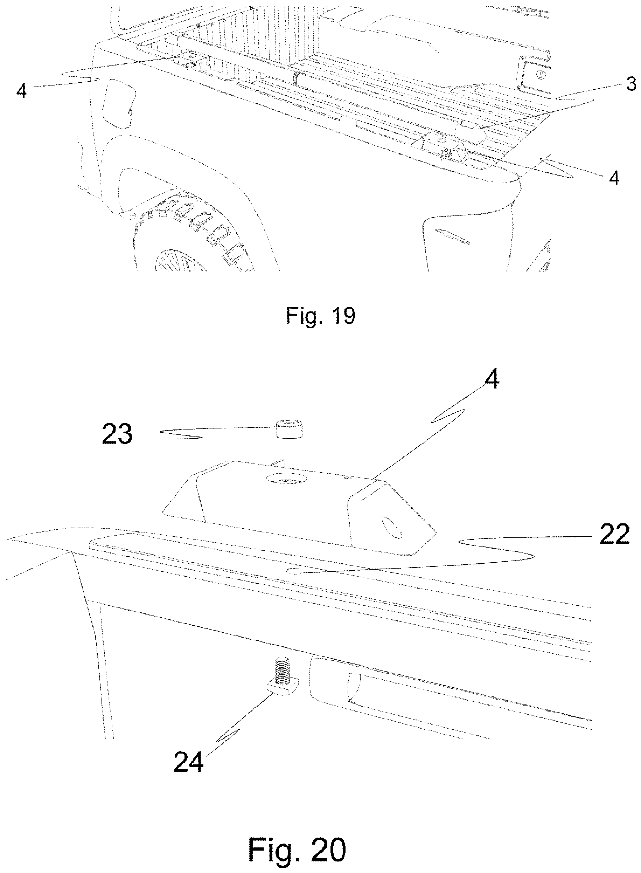

A preferred embodiment of a kit according to the second aspect of the invention is explained next with reference to Fig. 18-20. The embodiment of Fig. 18 comprises two rails 3 of the first aspect of the invention and four bases 4. Each of the shown rails 3 may be removably attached on a respective sidewall 1a of the truck's truck bed via two of the bases 4 which are removably attached on an edge 1b of the respective sidewall 1a as shown in Fig. 18-20. Specifically, in the embodiment of Fig. 18-20 each base 4 may be attached to a respective opening 22 on the edge 1b of the sidewall 1a, via the use of a bolt 24 partially insertable in the opening 22 and the base 4, and a nut 23 which can be inserted in the base 4 and can be coupled to the bolt 24 for securing the base 4 on the sidewall 1a.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A rail (3) removably installable as a handrail on one of two lateral sidewalls (1a) of a truck bed of a pickup truck (1) and, alternatively, as a crossbar on and across the two lateral sidewalls (1a), wherein the rail (3) is lengthwise telescopic.

2. A rail (3) according to claim 1, wherein the rail is removably installable as the handrail in a corresponding guide (5) of the one of the two lateral sidewalls of the truck bed and, alternatively, as the crossbar on and across the corresponding guides (5) on the two lateral sidewalls (1a), wherein
each guide (5) is configured to be installed lengthwise along the corresponding one of the lateral sidewalls (1a) of the truck bed.

3. A rail (3) according to claim 1 or claim 2, comprising two or more securable parts (8) which are arranged along a length of the rail (3) and are being configured for being attached to any of the sidewalls.

4. A rail according to claims 2 and 3, wherein the two or more securable parts are configured to be attached to any of the sidewalls via the corresponding guide (5).

5. A rail (3) according to any of claims 3-4, further comprising a slit (19) which lengthwise is arranged across at least a portion of the length of the rail (3) and is configured to receive attached thereat the two or more securable parts (8).

6. A rail (3) according to claim 5, wherein the two or more securable parts (8) are configured to slide along the slit (19).

7. A rail (3) according to any of the preceding claims, wherein the rail (3) comprises a central part (3a, 16a) and two lateral parts (3b, 3c, 16b, 16c) which lengthwise across the rail (3) are slidably attached to the central part (3a, 16a) on opposite sides of the central part (3a, 16a) such that either of lateral parts (3b, 3c, 16b, 16c) can lengthwise slide along the rail (3) with respect to the central part (3a, 16a).

8. A rail (3) according to any of the preceding claims, further comprising a fixing mechanism which is configured to be activated for enabling a change of a length of the rail (3), and be deactivated for preventing the change of the length of the rail (3).

9. A kit comprising:
a rail (3) according to any of the preceding claims; and
two or more bases (4), each base (4) configured for being simultaneously attached to the rail (3) and to one of the lateral sidewalls of the truck bed.

10. A kit according to claim 7, wherein at least one of the bases (4) comprises a securing mechanism (7) which is configured for securing firmly attached thereat the rail (3), preferably the securing mechanism (7) comprising a lock.

11. A kit according to any claims 7-8, further comprising a guide (5) configured to be installed lengthwise along the one of the lateral sidewalls (1a) of the truck bed, wherein the guide (5) is also configured to host attached thereat at least one of the two or more bases (4).

12. A kit according to claim 11, further comprising positioning means attachable to guide (5) and to the base (4) and configured to fix in position on the guide (5) the base (4).

13. A kit according to claim 12, wherein the guide (5) comprises a slit (10) which lengthwise is arranged across at least a portion of the length of the guide (5) and is configured to receive attached thereat the positioning means.

14. A kit according to any of claims 11-13, wherein the guide (5) is configured to support and guide a rollable curtain (2) which is for covering the truck bed of the pickup truck (1).

15. A system installable on a truck bed of a pickup truck (1), the system comprising:
two or more rails (3) according to claim 1;
a plurality of bases (4);
two guides (5); and
a rollable curtain (2) for covering the truck bed;
wherein each base (4) is configured for being simultaneously attached to a corresponding one of the rails (3) and to a corresponding one of the guides (5);
each of the guides (5) is configured to be installed lengthwise along a corresponding one of the lateral sidewalls (1a) of the truck bed, and wherein the guide (5) is also configured to host attached thereat the base (4);
each of the guides (5) is configured to support and guide the rollable curtain (2).
